# EUROPEAN PATENT SPECIFICATION

(11) **EP 3 383 824 B1**
(45) Date of publication and mention of the grant of the patent: **25.09.2019**
(21) Application number: 16819225.0
(22) Date of filing: 30.11.2016
(51) Int. Cl.: C04B 35/185, C04B 35/195, C04B 35/478, C04B 35/636, C04B 38/00

(54) **METHODS OF MAKING POROUS CERAMIC ARTICLES**
VERFAHREN ZUR HERSTELLUNG VON PORÖSEN KERAMIKARTIKELN
PROCÉDÉS DE FABRICATION D'ARTICLES POREUX EN CÉRAMIQUE

(30) Priority: 30.11.2015 US 201562261119 P
(43) Date of publication of application: 10.10.2018
(73) Proprietor: Corning Incorporated, Corning, New York 14831 (US)
(72) Inventor: BRONFENBRENNER, David Jack, Painted Post, New York 14870 (US); LEHMAN, Michael James, Canisteo, New York 14823 (US); LEWIS, Mark Alan, Horseheads, NewYork 14845 (US); MURRAY, Pamela Jeanne, Corning, New York 14830 (US); SHANLEY, Deborah Lynn, Wellsboro, Pennsylvania 16901 (US)
(74) Representative: Sturm, Christoph
(86) International application number: PCT/US2016/064205
(87) International publication number: WO 2017/095916

(56) References cited:
- EP-A1- 1 145 646
- WO-A2-2009/037354
- US-A1- 2015 102 516

## Description

### Background

### FIELD

Porous ceramic articles are useful to facilitate filtering of gases and fluids to remove undesirable components. For example, porous ceramic honeycomb articles are known to filter exhaust gases from an engine before releasing the filtered exhaust gas to the atmosphere. Additionally, ceramic articles can be used as substrates and support catalysts.

In the formation of ceramic articles, e.g., silicon carbide, cordierite, mullite, alumina, or aluminum titanate articles, ceramic batch compositions are prepared by mixing various inorganic and organic components. In order to form the ceramic articles, the ceramic batch composition may be fed through an extrusion die after the ceramic batch components are mixed.

US 2015/102516 A1 discloses a method for making a ceramic article, comprising: mixing a ceramic batch composition, said ceramic batch composition comprising amylose and amylopectin; extruding the ceramic batch composition through an extrusion die to form an extruded green ceramic article; drying the extruded green ceramic article.

US 2009/037354 A2 discloses the use of amylose and amylopectin in combination in the manufacturing of mesoporous carbon materials. EP 1 145 646 A1 discloses amylose and amylopectin as degradable starches in the food industry.

### SUMMARY

In one aspect, a ceramic-forming mixture (or "ceramic batch composition", both of which terms are used herein to denote a mixture of components that can comprise ceramic and/or ceramic-forming components, which can be formed into green ware and sintered or reactively sintered upon firing to result in a ceramic ware or product) comprises one or more starches having an aggregate average amylose content of 35% or higher by total weight of the starch(es), as well as methods of manufacturing green ware, and porous ceramic bodies.

The invention provides a method for making ceramic articles according to claim 9. In various embodiments, the amylose:amylopectin ratio ranging from about 20:80 to about 80:20. In further embodiments, the ceramic batch composition comprises at least one starch comprising amylose and amylopectin at a ratio ranging about 40:60 to about 80:20. In further embodiments, the at least one starch is chosen from native starches, cross-linked starches, and lightly cross-linked starches, for example corn, rice, or potato starches. The at least one starch may be present in an amount up to about 20% by weight, relative to the total weight of the ceramic batch, as a super addition. In further embodiments, the methods further comprise measuring the amount of pressure required to extrude the ceramic batch through the extrusion die. In yet further embodiments, the methods further comprise adjusting the amylose:amylopectin ratio in the ceramic batch after measuring the pressure.

The invention also provides a method for reducing extrusion pressure during a process of making a ceramic article according to claim 1. The at least one starch may be present in an amount up to about 20% by weight, relative to the total weight of the ceramic batch, as a super addition.

Additional features and advantages of the invention as claimed will be set forth in the detailed description which follows, and in part will be readily apparent to those skilled in the art from that description or recognized by practicing the invention as claimed herein, including the detailed description which follows, the claims, as well as the appended drawings.

It is to be understood that both the foregoing general description and the following detailed description present various embodiments of the disclosure, and are intended to provide an overview or framework for understanding the nature and character of the claims. The accompanying drawings are included to provide a further understanding of the disclosure, and are incorporated into and constitute a part of this specification. The drawings illustrate various embodiments of the disclosure and together with the description serve to explain the principles and operations of the disclosure.

### BRIEF DESCRIPTION OF THE DRAWINGS

The accompanying drawings, which are included to provide a further understanding of the invention and are incorporated in and constitute a part of this specification, together with the description serve to explain the principles of the invention.
FIG. 1 is a graphical representation of the impact of amylose content on the wall drag responses of various starches.
FIG. 2 is a graphical representation of various starch varieties and their corresponding wall drag responses.
FIG. 3 is a graphical representation of various starch varieties and their corresponding particle sizes.

### DETAILED DESCRIPTION

Ceramic-forming mixtures (or "ceramic batch compositions", both of which terms are used herein to denote a mixture of components that can comprise ceramic and/or ceramic-forming components, which can be formed into green ware and sintered or reactively sintered upon firing to result in a ceramic ware or product) are disclosed herein which comprise one or more starches having an aggregate average amylose content of 35% or higher by total weight of the starch(es), as well as methods of manufacturing green ware, and porous ceramic bodies, from such ceramic-forming mixture. Such ceramic-forming mixture can be implemented in methods for reducing the amount of pressure required to extrude a ceramic batch composition, as well as methods of making porous ceramic articles. The ceramic batch composition useful in exemplary methods according to the disclosure comprises one or more starches have an aggregate average amylose content of 35% or greater by weight of total amount of starch. Thus, the ceramic-forming mixtures can in some embodiments contain a single starch (or starch type), or a combination of two or more starches, which give an overall amylose content of the starches (aggregate average) which is greater than or equal to 35% by weight, in some embodiments greater than or equal to 50% by weight, in some embodiments greater than or equal to 70% by weight, and in some embodiments greater than or equal to 80% by weight of the total starch content. In some embodiments, the median particle size of at least one of the starches (or of the starch if only one starch) is less than 15.0 micrometers, and in some embodiments, less than 10.0 micrometers, and in some embodiments between 5.0 and 15.0 micrometers, and in some embodiments between 5.0 and 10.0 micrometers. In some embodiments, the one or more starches is selected from the group consisting of corn starch, rice starch, potato starch, and combinations thereof. Thus, in some embodiments, the ceramic-forming mixture can comprise a single starch, such as a corn starch, or a plurality of starches, such as a plurality of corn starches, or a corn starch and a rice starch, for example. In some embodiments, a high overall amylose content of the starches can be achieved with one or more high amylose content starches, or with a combination of one or more high amylose content starches with one or more low amylose content starches. As used herein, a high amylose content starch is one which has 35% or greater amylose content for that particular starch (the remainder being predominantly if not exclusively amylopectin), and a low amylose content starch is one which has less than 35% amylose content for that particular starch. Accordingly, the aggregate average amylose content of the ceramic-forming mixture can be adjusted by selecting a greater or lesser quantity of one or more starches each having a certain individual amylose content, in order to increase or decrease the overall amylose content of the batch. In some exemplary embodiments, one or more the starches in the ceramic-forming mixture, such as one or more high amylose starches, can be crosslinked, hydrophobically treated, or both., as well as non-crosslinked, which may be hydrophobically treated or not.

The amount of pressure needed to feed the ceramic batch composition through the extruder, as well as the rate at which the composition can be pushed through the die ("feed rate"), is limited by a variety of parameters, for example viscosity of the composition and "wall drag" encountered while the composition travels through the extrusion die.

Pore formers can be chosen from a variety of components that form pores in the ceramic article when they are burned out on firing leaving voids or "pores," thus providing a ceramic article having high porosity. Starches are used because they are cost effective and allow for tailoring the substrate/filter design to meet various requirements. Starches having a particular ratio of amylose to amylopectin can provide a ceramic batch composition having a rheology that allows for a reduced amount of pressure needed to extrude a ceramic batch composition, and a reduced wall drag of the ceramic batch composition through the extrusion die, and thus can increase the feed rate at which the ceramic batch composition can be extruded.

According to various embodiments, starches with a higher amylose content may provide a decrease in wall drag of the ceramic batch composition during extrusion. As used herein, the terms "higher amylose content," "higher amylose starches," and the like, are intended to signify a relative increase in the amylose content, relative to the amylopectin content. For example, this may mean that the starch has an amylose:amylopectin ratio of greater than 35:65, such as, for example, greater than about 40:60, greater than about 50:50, greater than about 60:40, greater than about 70:30, greater than about 80:20, or greater than about 90:10.

Additionally, the hydrophobicity of higher amylose starches reduces water demand of the ceramic batch, which reduces binder competition for water and increases binder gelation temperature. Higher amylose content in the starch may also provide higher pasting temperatures, which maintains granule structure of the native material and reduces requirements on crosslinking/hydrophobic treatments that may result in unwanted contaminants.

According to various embodiments of the disclosure, at least one starch may be included in the ceramic batch compositions as a source of the amylose and amylopectin. The starch may be chosen as the pore forming component. Exemplary starches that may be chosen from native starch or cross-linked starch having a ratio of amylose to amylopectin ranging from about 35:65 to about 95:5.

In some embodiments, the amylose:amylopectin ratio may range from about 35:65 to about 80:20. In some embodiments, amylose and amylopectin may be present in an amylose:amylopectin ratio of about 35:65, about 40:60, about 45:55, about 50:50, about 55:45, about 60:40, about 65:35, about 70:30, about 75:25, about 80:20, about 85:15, about 90:10, or about 95:5.

As used herein, the terms "amylose:amylopectin ratio," "ratio of amylose to amylopectin," and the like, are intended to include only the amounts of amylose and amylopectin, relative to each other. Any other components of the ceramic batch composition or pore former are considered separately from this ratio. Thus, the reference to a "pore former chosen from starches having an amylose to amylopectin ratio of 80:20," means that the pore former comprises at least one starch comprising amylose and amylopectin in an amount of 80% amylose and 20% amylopectin, relative to each other only, but may comprise other components.

A native or cross-linked starch may be used in accordance with the embodiments disclosed herein. As used herein, a native starch is a starch that has been extracted from a plant, without further modification. in some embodiments, the starch is chosen from lightly cross-linked starches, moderately cross-linked starches, highly cross-linked starches, or completely cross-linked starches. As used herein, a lightly cross-linked starch may be cross-linked with about 1, such as about 2 or about 3 equivalents of cross-linking agent; a moderately cross-linked starch may be cross-linked with greater than about 3, such as about 4 or about 5 equivalents of cross-linking agent; a highly cross-linked starch may be cross-linked with greater than about 5, such as about 6, about 7, about 8, or about 9 equivalents of cross-linking agent; and a completely cross-linked starch may be cross-linked with about 10 or more equivalents of cross-linking agent.

Non-limiting examples of starches that may be used in accordance with various embodiments include rice starches, potato starches, pea starches, corn starches, sago starches, and mixtures thereof, in native or cross-linked form. By way of example, Hylon® VII and/or Hylon® V, sold by Ingredion, may be selected. In other embodiments, Dura-Bond® from Henkel Corp. or Amioca® from Inter-National Starch, Inc., may be selected.

In certain embodiments, the at least one starch may be present in the ceramic batch composition in an amount up to about 30% by weight, such as up to about 25%, up to about 20%, up to about 15%, up to about 10%, up to about 8%, up to about 5%, or up to about 3%, relative to the total weight of the ceramic batch, as a super addition. As used herein, the term "super addition" refers to adding additional ingredients or materials to a ceramic batch composition or formulation in excess of, or in addition to, a 100 wt% base ceramic formulation where the base ceramic formulation comprises only the ceramic-forming inorganic components.

As used herein, the term "ceramic-forming powder" is intended to denote only the inorganic components that are included in the ceramic batch composition to form the base ceramic formulation, including by way of example cordierite-forming powders, mullite-forming powders, and aluminum titanate-forming powders. The terms "ceramic batch," "ceramic batch composition," "ceramic-forming mixture" and the like, are used herein to denote a substantially homogenous mixture comprising at least one ceramic or ceramic-forming powder and the at least one starch, as well as any other inorganic or organic component used in preparing batch compositions for making ceramic articles.

For example, the ceramic batch composition may further comprise at least one binder. By way of example only, the at least one binder may be chosen from organic binders, such as cellulose-containing components, for example, methylcellulose, hydroxypropyl methylcellulose, methylcellulose derivatives, and combinations thereof. In certain non-limiting embodiments, the binder may be present in the ceramic batch composition in an amount ranging from about 1 % to about 10% by weight, for example, from about 2% to about 6%, or about 3% to about 5%, relative to the total weight of the ceramic batch composition.

By way of further example, ceramic batch compositions may optionally comprise one or more additional pore forming components in addition to the at least one starch component described above. Such additional pore formers may be chosen from, for example, carbon (e.g., graphite (natural or synthetic), activated carbon, petroleum coke, and carbon black), starches other than those comprising the specified ratio of amylose to amylopectin (e.g., corn, barley, bean, potato, rice, tapioca, pea, sago palm, wheat, canna, and walnut shell flour), and polymers (e.g., polybutylene, polymethylpentene, polyethylene (preferably beads), polypropylene (preferably beads), polystyrene, polyamides (nylons), epoxies, ABS, Acrylics, and polyesters (PET)). In various embodiments, the optional additional pore forming component may be present in the ceramic batch composition in an amount up to about 30% by weight, such as up to about 25%, up to about 20%, up to about 15%, up to about 10%, up to about 8%, up to about 5%, or up to about 3%, relative to the total weight of the ceramic batch, as a super addition.

In further embodiments, the total pore forming component, including the at least one starch component described above and the optional additional pore forming component, when present, may be present in the ceramic batch composition in an amount up to about 30% by weight, such as up to about 25%, up to about 20%, up to about 15%, up to about 10%, up to about 8%, up to about 5%, or up to about 3%, relative to the total weight of the ceramic batch, as a super addition.

Solvents may also be included in the ceramic batch composition. It is within the ability of a skilled artisan to select an appropriate solvent, if desired, for the ceramic batch. The solvent may, for example, be used to wet the ceramic-forming powders and/or to provide a medium for the binder to dissolve, thus providing plasticity to the ceramic batch. In various exemplary embodiments, the at least one solvent may be aqueous, for example water and water-miscible solvents, or organic, or some combination thereof. In at least one exemplary embodiment, the solvent comprises water, for example, deionized water. According to various embodiments, the solvent may be present in the batch composition in an amount ranging from about 20% to about 50% by weight, such as about 25% to about 40%, or about 30% to about 35%, relative to the total weight of the ceramic batch.

Additional ceramic batch components may include, by way of non-limiting example, various organic additives used to modify the rheology of the batch such as lubricants, dispersants, surfactants, and plasticizers. Such optional components may be added as a superaddition of about 2% to about 20%, such as about 6% to about 15%, or about 8% to about 12%, by weight relative to the weight of the ceramic batch composition.

The batch materials may be mixed to obtain a substantially homogeneous batch composition using any method known in the art. For example, the at least one ceramic-forming powder may be wetted with at least one component chosen from solvents, binders, and combinations thereof. The solvent and/or binder may be added in an amount that is suitable to wet and/or plasticize the batch. The mixing and/or plasticization of the batch may take place in a suitable mixer in which the batch will be plasticized. For example, a ribbon mixer, twin-screw extruded/mixer, auger mixer, muller mixer or double arm mixer may be used to mix the ceramic batch composition.

In various embodiments, the disclosure relates to methods of making ceramic articles. Methods of making ceramic articles comprise mixing the components to form a ceramic batch composition and extruding the mixed batch composition. Further, methods according to various embodiments may include measuring the pressure during extrusion, and/or adjusting the ratio of amylose to amylopectin.

In yet further embodiments, the disclosure relates to methods for reducing extrusion pressure of the ceramic batch during a process for making a ceramic article, comprising mixing the components to form a ceramic batch composition, extruding the mixed batch composition, measuring the pressure during extrusion, and adjusting the ratio of amylose to amylopectin. Various ceramic batch compositions according to the disclosure demonstrate decreased wall drag at a given stiffness, resulting in higher feed-rate capabilities and thus require less pressure for the extrusion step.

The ceramic-forming powders, at least one starch, binder component, solvent, and any additional optional components may be mixed by any known method, such as, for example, in a muller or Littleford mixer. By way of non-limiting example, the solvent may be added to the ceramic-forming powders, at least one starch, and binder component, in an amount that is less than is needed to plasticize the batch. For example, with water as the solvent, the water hydrates the binder and the powder particles. A surfactant and/or lubricant, if desired, may then be added to the mix to wet out the binder and powder particles.

The batch may then be plasticized by shearing the wet mix in any suitable mixer in which the batch will be plasticized, such as, but not limited to, a twin-screw extruder/mixer, auger mixer, muller mixer, or double arm, etc. The extent of plasticization is dependent on the concentration of the components (binder, solvent, starch, surfactant, lubricant, and ceramic-forming powders), temperature of the components, the amount of work put in to the batch, the shear rate, and extrusion velocity.

The mixed and plasticized ceramic batch composition may then be extruded, for example through an extrusion or forming die, to form a green ceramic article having any desired shape and/or size. It may be desirable in various embodiments to measure the pressure during the process of extruding the ceramic batch composition, for example with a pressure transducer.

In certain exemplary and non-limiting embodiments, methods according to the disclosure may comprise adjusting the ratio of amylose to amylopectin in the ceramic batch composition. A process of adjusting the ratio of amylose to amylopectin may, in certain embodiments, comprise keeping all or substantially all the components of the ceramic batch composition substantially the same, but adding at least one starch having a different amylose:amylopectin ratio, for example a higher amylose:amylopectin ratio. For example, after a ceramic batch composition is prepared by mixing and plasticizing the components, and extruding the mixture through a die, if it is desired to reduce the amount of pressure needed for the extrusion step, and/or to increase the feed rate through the die, a subsequent ceramic batch composition may be prepared with at least one starch having a different ratio of amylose to amylopectin. The steps of measuring the extrusion pressure during the extruding step and adjusting the amylose:amylopectin ratio in the ceramic batch can be repeated until a desired extrusion pressure and/or feed rate is obtained.

By way of example, if a first ceramic batch composition is prepared with ceramic-forming powder, Hylon® V corn starch, which has a 50:50 ratio of amylose:amylopectin, at least one binder, and at least one solvent, and it is desired to reduce the amount of pressure needed to extrude the batch, and/or increase the feed rate, to form the green ceramic article, a second ceramic batch composition can be prepared substantially identically to the first ceramic batch composition (i.e. using substantially the same types and amounts of ceramic-forming powder, at least one binder, and at least one solvent), but comprising Hylon® VII corn starch, which has a 70:30 ratio of amylose:amylopectin, in place of the Hylon® V corn starch. In such an exemplary embodiment, according to at least certain aspects of the disclosure, the second ceramic batch composition may need less pressure and/or may have a greater feed rate for extrusion than the first ceramic batch composition.

After mixing, plasticizing, and extruding the ceramic batch composition to form a green ceramic article, the extrudate may be dried and fired. The firing conditions of temperature and time may depend on the composition and size and geometry of the body, and are within the ability of those of skill in the art to determine.

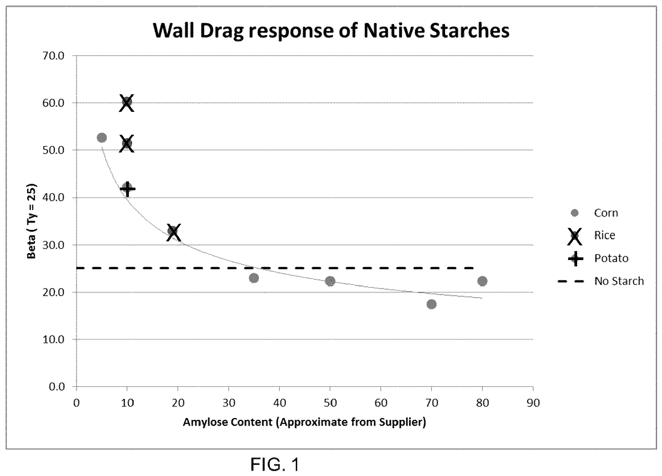

FIG. 1 is a graph that shows the impact of amylose content on the wall drag responses of native starches, including corn (plain circle), rice (X), and potato (+) starch. Wall drag response, as shown on the Y axis, is measured by inlet pressure versus outlet pressure. The amylose content of the native starches, as shown in the X axis, is measured in percentage (%). We have surprisingly found that high amylose content starches reduce the wall drag, or have wall drag characteristics which induce little to no wall drag due to the presence of the starch within the ceramic batch, and in some cases induces a wall drag which is even lower than having no starch at all in the ceramic-forming mixture, for example the corn starches represented in FIG. 1.

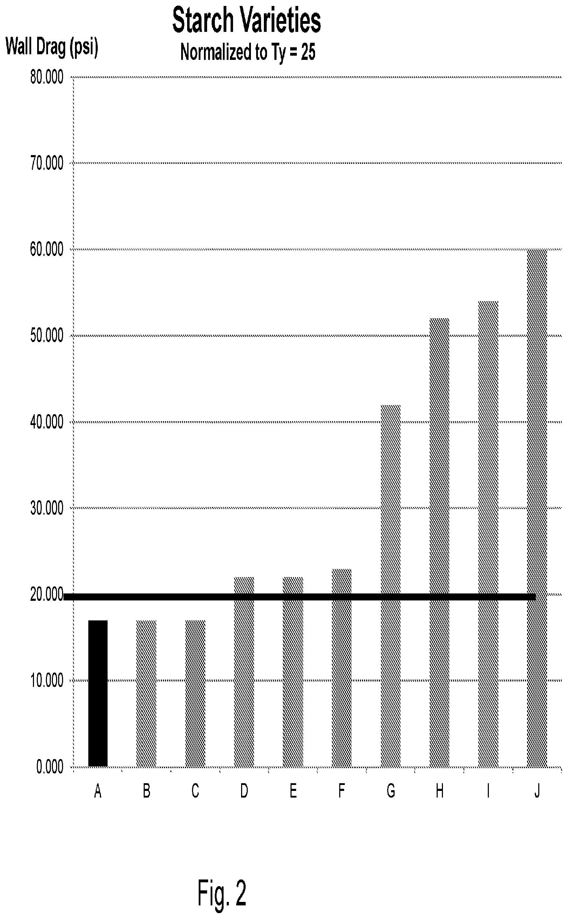

FIG. 2 is a graph that shows the room temperature wall drag response of starch varieties. As seen, higher amylose content produces lower wall drag, which in some embodiments is close to or equivalent to a wall drag that is produced with no starch present in the ceramic-forming batch. FIG. 2 shows wall drag for: A) No Starch; B) Hylon VII 70% Amylose Corn Starch; C) Hydrophobic Corn Starch (not cross-linked but hydrophobically coated); D) Cross-linked Corn Starch E891:21-1 ; E) Hylon V 50% Amylose Corn Starch; F) Dura-bond native corn starch; G) Small potato starch Modified, 20% Amylose E889:41-1; H) Rice Starch Regular 19% Amylose; I) AMIOCA <5% Amylose Corn Starch; J) Rice Starch Modified <10% Amylose E889:41-3.

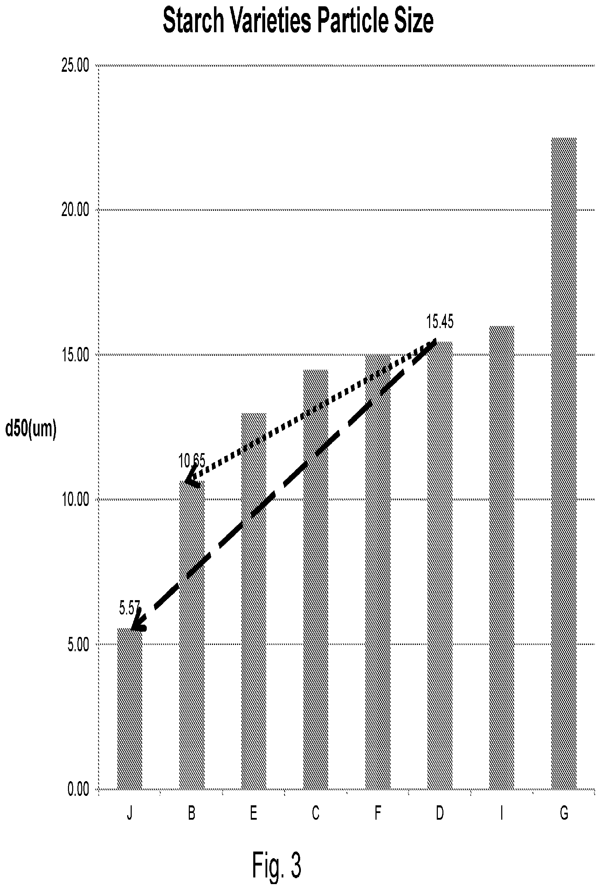

FIG. 3 is a graph that shows the particle size of starch varieties as cross-referenced with the starch varieties of FIG. 2.

As set forth herein, various aspects of the disclosure are described with reference to the exemplary embodiments and/or the accompanying drawings in which exemplary embodiments of the invention are illustrated. This invention may, however, be embodied in many different forms and should not be construed as limited to the exemplary embodiments shown in the drawings or described herein. It will be appreciated that the various disclosed embodiments may involve particular features, elements or steps that are described in connection with that particular embodiment. It will also be appreciated that a particular feature, element or step, although described in relation to one particular embodiment, may be interchanged or combined with alternate embodiments in various non-illustrated combinations or permutations.

It will also be understood that, as used herein the terms "the," "a," or "an," mean "at least one," and should not be limited to "only one" unless explicitly indicated to the contrary. Thus, for example, reference to "a pore former" includes examples having two or more pore formers unless the context clearly indicates otherwise.

Unless otherwise expressly stated, it is in no way intended that any method set forth herein be construed as requiring that its steps be performed in a specific order. Accordingly, where a method claim does not expressly recite an order to be followed by its steps or it is not otherwise specifically stated in the claims or descriptions that the steps are to be limited to a specific order, it is no way intended that any particular order be inferred.

While various features, elements or steps of particular embodiments may be disclosed using the transitional phrase "comprising," it is to be understood that alternative embodiments, including those that may be described using the transitional phrases "consisting" or "consisting essentially of," are implied.

## Claims

1. A method for reducing extrusion pressure during a process for making a ceramic article, comprising:
mixing a first ceramic batch composition, said first ceramic batch composition comprising amylose and amylopectin, and said first ceramic batch composition having an amylose:amylopectin ratio ranging from 35:65 to 95:5;
extruding the first ceramic batch composition through an extrusion die to form an extruded green ceramic article;
measuring the extrusion pressure of the extruding step; and
adjusting the amylose:amylopectin ratio in a second ceramic batch composition;
wherein adjusting the amylose:amylopectin ratio in the second ceramic batch composition comprises adding a pore former having a higher amylose:amylopectin ratio than in the first ceramic batch composition;
wherein the amount of pressure needed to extrude the second ceramic batch composition is less than the amount of pressure needed to extrude the first ceramic batch composition at the same feed rate.

2. The method according to claim 1, wherein the first ceramic batch composition comprising amylose and amylopectin has an amylose:amylopectin ratio ranging from 40:60 to 80:20.

3. The method according to claim 1, wherein the first ceramic batch composition comprises at least one starch comprising amylose and amylopectin and an amylose:amylopectin ratio ranging from 40:60 to 80:20.

4. The method according to claim 3, wherein the at least one starch is chosen from corn, rice, or potato starches.

5. The method according to claim 3, wherein the at least one starch is chosen from native starches.

6. The method according to claim 3, wherein the at least one starch is chosen from crosslinked starches.

7. The method according to claim 3, wherein the at least one starch is present in an amount up to 20% by weight, relative to the total weight of the ceramic batch, as a super addition.

8. The method according to claim 1, wherein the extrusion pressure is measured with a pressure transducer.

9. A method for making a ceramic article, comprising:
mixing a first ceramic batch composition, said first ceramic batch composition comprising amylose and amylopectin, wherein said first ceramic batch composition has an amylose:amylopectin ratio ranging from 35:65 to 95:5;
extruding the first ceramic batch composition through an extrusion die to form an extruded green ceramic article;
measuring the amount of pressure required to extrude the first ceramic batch through the extrusion die;
adjusting the amylose:amylopectin ratio in a second ceramic batch composition after measuring the pressure;
wherein adjusting the amylose:amylopectin ratio in the second ceramic batch composition comprises adding a pore former having a higher amylose:amylopectin ratio than in the first ceramic batch composition;
wherein the amount of pressure needed to extrude the second ceramic batch composition is less than the amount of pressure needed to extrude the first ceramic batch composition at the same feed rate; and
drying the extruded green ceramic article.

10. The method according to claim 9, wherein the first ceramic batch composition comprises at least one starch comprising amylose and amylopectin and an amylose:amylopectin ratio ranging from 40:60 to 80:20.

11. The method according to claim 10, wherein the at least one starch is chosen from corn, rice, or potato starches.

12. The method according to claim 10, wherein the at least one starch is chosen from native starches.

13. The method according to claim 10, wherein the at least one starch is chosen from crosslinked starches.

14. The method according to claim 10, wherein the at least one starch is present in an amount up to 20% by weight, relative to the total weight of the ceramic batch composition, as a super addition.

## Patentansprüche

1. Verfahren zum Verringern des Extrusionsdrucks bei einem Verfahren zur Herstellung eines Keramikgegenstands, aufweisend:
Mischen einer ersten Keramik-Batchzusammensetzung, wobei die erste Keramik-Batchzusammensetzung Amylose und Amylopectin aufweist und die erste Keramik-Batchzusammensetzung ein Amylose:Amylopectin-Verhältnis in dem Bereich von 35:65 bis 95:5 aufweist;
Extrudieren der ersten Keramik-Batchzusammensetzung durch eine Extrusionsdüse, um einen extrudierten Keramik-Grünkörper zu bilden;
Messen des Extrusionsdrucks des Extrusionsschritts; und
Einstellen des Amylose:Amylopectin-Verhältnisses in einer zweiten Keramik-Batchzusammensetzung;
wobei das Einstellen des Amylose:Amylopectin-Verhältnisses in der zweiten Keramik-Batchzusammensetzung das Zugeben eines Porenbildners mit einem höheren Amylose:Amylopectin-Verhältnis als in der ersten Keramik-Batchzusammensetzung aufweist;
wobei die Höhe des Drucks, die zum Extrudieren der zweiten Keramik-Batchzusammensetzung erforderlich ist, kleiner als die Höhe des Drucks ist, die zum Extrudieren der ersten Keramik-Batchzusammensetzung mit gleichen Zufuhrrate erforderlich ist.

2. Verfahren gemäß Anspruch 1, wobei die erste Keramik-Batchzusammensetzung, die Amylose und Amylopectin aufweist, ein Amylose:Amylopectin-Verhältnis in dem Bereich von 40:60 bis 80:20 aufweist.

3. Verfahren gemäß Anspruch 1, wobei die erste Keramik-Batchzusammensetzung zumindest eine Stärke aufweist, die Amylose und Amylopectin und ein Amylose:Amylopectin-Verhältnis in dem Bereich von 40:60 bis 80:20 aufweist.

4. Verfahren gemäß Anspruch 3, wobei die zumindest eine Stärke ausgewählt ist aus Mais-, Reis- und Kartoffelstärke.

5. Verfahren gemäß Anspruch 3, wobei die zumindest eine Stärke aus nativen Stärken ausgewählt ist.

6. Verfahren gemäß Anspruch 3, wobei die zumindest eine Stärke aus vernetzten Stärken ausgewählt ist.

7. Verfahren gemäß Anspruch 3, wobei die zumindest eine Stärke in einer Menge von bis zu 20 Gew.-%, bezogen auf das Gesamtgewicht des Keramikbatchs, als zusätzliche Zugabe vorhanden ist.

8. Verfahren gemäß Anspruch 1, wobei der Extrusionsdruck mithilfe eines Druckwandlers gemessen wird.

9. Verfahren zur Herstellung eines Keramikgegenstands, aufweisend:
Mischen einer ersten Keramik-Batchzusammensetzung, wobei die erste Keramik-Batchzusammensetzung Amylose und Amylopectin aufweist, wobei die erste Keramik-Batchzusammensetzung ein Amylose:Amylopectin-Verhältnis in dem Bereich von 35:65 bis 95:5 aufweist;
Extrudieren der ersten Keramik-Batchzusammensetzung durch eine Extrusionsdüse, um einen extrudierten Keramik-Grünkörper zu bilden;
Messen der Höhe des Extrusionsdrucks, die zum Extrudieren des ersten Keramikbatchs durch die Extrusionsdüse erforderlich ist;
nach dem Messen des Drucks Einstellen des Amylose:Amylopectin-Verhältnisses in einer zweiten Keramik-Batchzusammensetzung;
wobei das Einstellen des Amylose:Amylopectin-Verhältnisses in der zweiten Keramik-Batchzusammensetzung das Zugeben eines Porenbildners mit einem höheren Amylose:Amylopectin-Verhältnis als in der ersten Keramik-Batchzusammensetzung aufweist;
wobei die Höhe des Drucks, die zum Extrudieren der zweiten Keramik-Batchzusammensetzung erforderlich ist, kleiner als die Höhe des Drucks ist, die zum Extrudieren der ersten Keramik-Batchzusammensetzung mit der gleichen Zufuhrrate erforderlich ist; und
Trocknen des Keramik-Grünkörpers.

10. Verfahren gemäß Anspruch 9, wobei die erste Keramik-Batchzusammensetzung zumindest eine Stärke aufweist, die Amylose und Amylopectin und ein Amylose:Amylopectin-Verhältnis in dem Bereich von 40:60 bis 80:20 aufweist.

11. Verfahren gemäß Anspruch 10, wobei die zumindest eine Stärke ausgewählt ist aus Mais-, Reis- und Kartoffelstärke.

12. Verfahren gemäß Anspruch 10, wobei die zumindest eine Stärke aus nativen Stärken ausgewählt ist.

13. Verfahren gemäß Anspruch 10, wobei die zumindest eine Stärke aus vernetzten Stärken ausgewählt ist.

14. Verfahren gemäß Anspruch 10, wobei die zumindest eine Stärke in einer Menge von bis zu 20 Gew.-%, bezogen auf das Gesamtgewicht des Keramikbatchs, als zusätzliche Zugabe vorhanden ist.

## Revendications

1. Procédé de réduction de pression d'extrusion pendant un processus de fabrication d'un article en céramique, comprenant :
le mélange d'une première composition de céramique, ladite première composition de céramique comprenant de l'amylose et de l'amylopectine, et ladite première composition de céramique ayant un rapport amylose:amylopectine dans la plage de 35:65 à 95:5 ;
l'extrusion de la première composition de céramique à travers une filière d'extrusion pour former un article en céramique vert extrudé ;
la mesure de la pression d'extrusion de l'étape d'extrusion ; et
l'ajustement du rapport amylose:amylopectine dans une deuxième composition de céramique ;
dans lequel l'ajustement du rapport amylose:amylopectine dans la deuxième composition de céramique comprend l'ajout d'un agent porogène ayant un rapport amylose:amylopectine plus élevé que dans la première composition de céramique ;
dans lequel la quantité de pression nécessaire pour extruder la deuxième composition de céramique est inférieure à la quantité de pression nécessaire pour extruder la première composition de céramique au même débit d'alimentation.

2. Procédé selon la revendication 1, dans lequel la première composition de céramique comprenant de l'amylose et de l'amylopectine a un rapport amylose:amylopectine dans la plage de 40:60 à 80:20.

3. Procédé selon la revendication 1, dans lequel la première composition de céramique comprend au moins un amidon comprenant de l'amylose et de l'amylopectine et un rapport amylose:amylopectine dans la plage de 40:60 à 80:20.

4. Procédé selon la revendication 3, dans lequel l'au moins un amidon est choisi parmi les amidons de maïs, de riz ou de pomme de terre.

5. Procédé selon la revendication 3, dans lequel l'au moins un amidon est choisi parmi des amidons natifs.

6. Procédé selon la revendication 3, dans lequel l'au moins un amidon est choisi parmi des amidons réticulés.

7. Procédé selon la revendication 3, dans lequel l'au moins un amidon est présent dans une quantité jusqu'à 20 % en poids, par rapport au poids total de l'article en céramique, en tant que superaddition.

8. Procédé selon la revendication 1, dans lequel la pression d'extrusion est mesurée avec un transducteur de pression.

9. Procédé de fabrication d'un article céramique, comprenant :
le mélange d'une première composition de céramique, ladite première composition de céramique comprenant de l'amylose et de l'amylopectine, dans lequel ladite première composition de céramique a un rapport amylose:amylopectine dans la plage de 35:65 à 95:5 ;
l'extrusion de la première composition de céramique à travers une filière d'extrusion pour former un article en céramique vert extrudé ;
la mesure de la quantité de pression requise pour extruder le premier lot de céramique à travers la filière d'extrusion ;
l'ajustement du rapport amylose:amylopectine dans une deuxième composition de céramique après la mesure de la pression ;
dans lequel l'ajustement du rapport amylose:amylopectine dans la deuxième composition de céramique comprend l'ajout d'un agent porogène ayant un rapport amylose:amylopectine plus élevé que dans la première composition de céramique ;
dans lequel la quantité de pression nécessaire pour extruder la deuxième composition de céramique est inférieure à la quantité de pression nécessaire pour extruder la première composition de céramique au même débit d'alimentation ; et
le séchage de l'article en céramique vert extrudé.

10. Procédé selon la revendication 9, dans lequel la première composition de céramique comprend au moins un amidon comprenant de l'amylose et de l'amylopectine et un rapport amylose:amylopectine dans la plage de 40:60 à 80:20.

11. Procédé selon la revendication 10, dans lequel l'au moins un amidon est choisi parmi les amidons de maïs, de riz ou de pomme de terre.

12. Procédé selon la revendication 10, dans lequel l'au moins un amidon est choisi parmi des amidons natifs.

13. Procédé selon la revendication 10, dans lequel l'au moins un amidon est choisi parmi des amidons réticulés.

14. Procédé selon la revendication 10, dans lequel l'au moins un amidon est présent en une quantité allant jusqu'à 20 % en poids, par rapport au poids total de la composition de céramique, en tant que superaddition.
